# EUROPEAN PATENT APPLICATION

(11) **EP 2 422 664 A2**
(43) Date of publication of application: **29.02.2012**
(21) Application number: 10767308.9
(22) Date of filing: 22.04.2010
(51) Int. Cl.: A47J 36/04, A47J 27/00

(54) **COOKING VESSEL PROCESSING METHOD AND COOKING VESSEL PROVIDED THEREBY**

(30) Priority: 24.04.2009 KR 20090035987; 09.02.2010 KR 20100011999
(71) Applicant: Ha, Sang-Hoon, Yangju-Si, Gyeonggi-Do 482-872 (KR)
(72) Inventor: Ha, Sang-Hoon, Yangju-Si, Gyeonggi-Do 482-872 (KR)
(74) Representative: Mounteney, Simon James
(86) International application number: PCT/KR2010/002526
(87) International publication number: WO 2010/123294

(57) **Abstract**

The present invention relates to a cooking vessel processing method and a cooking vessel provided thereby, and more specifically, to a cooking vessel processing method, which involves forming a base-coating layer over a base that is formed at the bottom of the cooking vessel; forming a printing layer over the base-coating layer by pad printing or screen printing; and forming a top-coating layer over the printing layer, and to a cooking vessel provided by the processing method. Conventional cooking vessels commonly use fluorine resin based materials as a non-stick coating material, but they have a weak surface strength (H 2-3) and the coating comes off during use or can be plasticized at high temperature (400°C or above), thereby deforming the base materials. However, a ceramic coating method using a sol-gel technique provides a high surface strength (H 8-9) and a coating provided thereby does not come off even when cleaned with a scrubbing sponge or pad or scraped down by a metal spatula such that a cooking vessel having such a coating can be washed with water and used continuously in a hygienic manner. Further, the coating provided by the sol-gel technique gets plasticized at a low temperature (200°C or below), thereby preventing the base materials from being deformed, and the coating is possible over a variety of materials. In the cooking vessel thus configured according to the present invention, the printing layer formed over the base-coating layer has various patterns, and the color of the printing layer changes depending on a heating temperature being transferred to the cooking vessel, which in turn helps a user determine the temperature being transferred to the cooking vessel with the naked eye. In addition, the top-coating layer formed over the base-coating layer contains a blend of magnetic elements such as iron, magnesium, cobalt and the like, and displays various patterns on the top of the cooking vessel depending on the angle of view and attracts the interest of users.

## Description

### Technical Field

The present invention relates to a cooking vessel processing method and a cooking vessel provided thereby, and more specifically, to a cooking vessel processing method, which includes forming a base-coating layer on a base that is formed on the bottom of the cooking vessel, forming a printing layer on the base-coating layer using pad printing or screen printing, and forming a top-coating layer on the printing layer, and to a cooking vessel provided by the processing method.

This cooking vessel can be reliably used because a curing process for drying the cooking vessel at 100 ∼ 200°C for 30 ∼ 40 min is repeated so that the base-coating layer and the top-coating layer are securely cured to the cooking vessel.

Also in the cooking vessel, the color or shape of the printing layer varies depending on the temperature transferred to the cooking vessel via the printing layer formed on the base-coating layer and so while the cooking vessel is heated a user can determine the heated temperature with the naked eye.

The printing layer is formed using a sol-gel process, thus facilitating the actual production of products.

The top-coating layer is formed of a transparent ceramic material and includes a blend comprising oxides of iron, magnesium, cobalt, etc., and thus the blend is displayed in the form of a hologram when viewed at different angles by a user. Even after such a cooking vessel has been used for a long period of time, a user can remain interested in cooking without becoming bored.

### Background Art

As known in the art, almost all of cooking vessels conventionally used are heated to a predetermined temperature and are thus made hot.

After the cooking vessel is made hot in this way, food is introduced into the cooking vessel so that it is cooked.

However, because a user cannot accurately check whether the cooking vessel was heated to some degree by a fire, he or she cannot but initiate cooking based on an estimate of the time or intuition.

In the case where cooking is performed as above, the temperature of the cooking vessel that has been made hot cannot be accurately checked, and thus the best cooking effects cannot be obtained upon cooking.

With the goal of solving this problem, cooking vessels the surface of which varies depending on changes in temperature have recently been devised.

However, such changes in temperature may be checked only when using fluorine resins, and are not observed when using ceramics because of processing and ceramic bonding problems.

Furthermore, such fluorine resins cannot be used for a long period of time because they peel off, and the use thereof is undesirably limited.

### Disclosure

### Technical Problem

Accordingly, an object of the present invention is to provide a cooking vessel, in which a printing layer having various patterns is formed on a base-coating layer so that the color of the printing layer varies depending on the temperature of heat transferred to the cooking vessel via the printing layer.

Another object of the present invention is to provide a cooking vessel, in which a top-coating layer is formed on the base-coating layer and includes a blend of iron, magnesium, cobalt, etc., which are reactive to magnets, so that various patterns are displayed as holograms on the cooking vessel depending on the viewing angle.

A further object of the present invention is to provide a cooking vessel, which is advantageous because the surface thereof does not peel off even when a scrubbing brush or metal spatula is used thanks to a high surface strength (H8 ∼ 9) by virtue of employing a ceramic coating method using a sol-gel process, and thus it may be washed with water after cooking and thereby continuously used in a hygienic manner, is plasticized at low temperature (200°C or less) thus preventing the deformation of the base, and may be coated with various materials.

### Technical solution

An aspect of the present invention provides a cooking vessel processing method, suitable for forming a coating layer on each of a base and a top using a ceramic material, the method comprising pre-heating the base of a cooking vessel to 50 ∼ 60°C and then forming a base-coating layer on the base using a ceramic material; primarily dry curing the cooking vessel including the base-coating layer at 100 ∼ 200°C for 30 ∼ 40 min; pre-heating the cured cooking vessel to 50 ∼ 60°C and then forming a top-coating layer using a transparent ceramic material; and secondarily dry curing the cooking vessel including the top-coating layer at 100 ∼ 200°C for 30 ∼ 40 min.

The method may further comprise forming a printing layer using a printer, after primarily dry curing the cooking vessel.

The top-coating layer may contain a magnetic material which is reactive to a magnetic force, and forming magnets for applying a magnetic force on the lower surface of the cooking vessel is performed, so that the magnetic material is applied along the array of the magnets.

The printing layer may be formed so as to be thermochromic using any one selected from among a mixture of organic red and black pigments, and a thermo pigment, which adhere efficiently to the base-coating layer.

Another aspect of the present invention provides a cooking vessel processing method, suitable for forming a coating layer on each of a base and a top, the method comprising pre--heating the base of a cooking vessel to 50 ∼ 60°C and then forming a base-coating layer on the outer surface of the base using a ceramic material; primarily dry curing the cooking vessel including the base-coating layer at 100 ∼ 200°C for 30 ∼ 40 min; pre-heating the cured cooking vessel to 50 ∼ 60°C and then forming a top-coating layer using a transparent ceramic material; and secondarily dry curing the cooking vessel including the top-coating layer at 100 ∼ 200°C for 30 ∼ 40 min.

The method may further comprise forming a printing layer using a printer, after primarily dry curing the cooking vessel.

The top-coating layer may contain a magnetic material which is reactive to a magnetic force, and forming magnets for applying a magnetic force on the inner surface of the cooking vessel may be performed, so that the magnetic material is applied along the array of the magnets.

The printing layer may be formed so as to be thermochromic using any one selected from among a mixture of organic red and black pigments, and a thermo pigment, which adhere efficiently to the base-coating layer.

A further aspect of the present invention provides a cooking vessel processed by any one of the above processing methods.

### Advantageous Effects

In a cooking vessel according to an embodiment of the present invention, a base-coating layer can be provided with various colors as desired by a user, as well as a limited color as in a fluorine resin coating, thus satisfying the needs of a user.

Also, the coating vessel has a high surface strength (H8 ∼ 9) and does not peel off even when a scrubbing brush or metal spatula is used, and can thus be washed with water after cooking and thereby continuously used in a hygienic manner.

In addition, the cooking vessel is plasticized at low temperature (200°C or less), thus preventing the deformation of the base of the cooking vessel itself, so that the cooking vessel can be used without changing.

In addition, a printing layer is formed using a mixture of organic red and black pigments in the form of iron oxides, which enable changes in color and are edible, or a thermochromic material such as a thermo pigment. Hence, when the cooking vessel is heated to an appropriate temperature appropriate for cooking, thermochromism occurs, thus facilitating the user cooking.

Accordingly, wasting the thermal energy used for cooking can be prevented, and cooking is performed at a temperature adapted for the kind of food, thereby obtaining delicious food.

Various patterns can be displayed depending on the viewing angle by means of the hologram formed on the cooking vessel, and thus a user can remain interested in cooking without becoming bored upon extended use of the cooking vessel.

When the cooking vessel is being used, internal thermochromism can be checked at any time, and adhesion between the base coating and the thermochromic printing is good and there are no problems of it peeling off during use, unlike fluorine resin coatings. This cooking vessel is harmless to the human body and can be safely used, because it is without cancerous materials, heavy metals, environmental hormone, organic compounds, toxic materials and poisonous gases.

According to another embodiment of the present invention, the thermochromatic printing layer is formed on the outer surface of the cooking vessel, and thus thermochromism of the cooking vessel can be observed at any time from the outside when it is being used.

In particular, in the case where a variety of induction instruments are used instead of gas ranges, burners, etc., which use direct fire, these induction instruments are an indirect fire source when using which it is difficult to check the presence of the fire source with the naked eye, and thus the cooking vessel is configured such that thermochromism can be observed from the outside, thereby alleviating the danger of a burn.

In the case where the cooking vessel is a frying pan with a shallow and wide cooking space, the internal thermochromism may be observed. On the other hand, a pot or bucket having a deep and narrow cooking space should be configured such that thermochromism is observed from the outside. In this case, another embodiment according to the present invention in which the printing layer is formed on the outer surface of the cooking vessel can impart very useful effects.

Also, various patterns can be displayed depending on the angle of viewing from the outside by means of the hologram formed on the cooking vessel. Even when the cooking vessel has been used for a long period of time, a user can stay interested in cooking without becoming bored.

### Description of Drawings

FIG. 1 is a block diagram of an embodiment according to the present invention;
FIG. 2 is of a side view and a partial cross-sectional view of the embodiment according to the present invention;
FIG. 3 is a top plan view of the embodiment according to the present invention, including a printing layer;
FIG. 4 is a top plan view of the embodiment according to the present invention, showing a hologram;
FIG. 5 is of a top plan view and a partial cross-sectional view of another embodiment according to the present invention;
FIG. 6 is a side view of another embodiment according to the present invention, including a printing layer; and
FIG. 7 is a side view of another embodiment according to the present invention, showing a hologram.

### **Description of the Reference Numerals in the Drawings**

A-cooking vessel
1-base
2-base-coating layer
3-printing layer
4-top-coating layer
5-magnet
41-hologram

### Best Mode

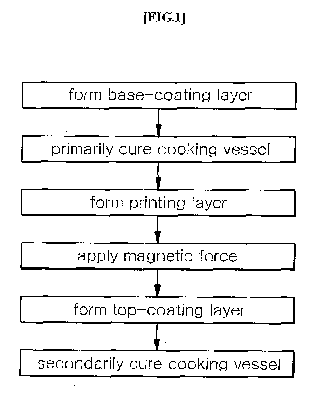

FIG. 1 is a block diagram of an embodiment according to the present invention. As shown in this drawing, a cooking vessel is processed by forming a base-coating layer 2; primarily dry curing a cooking vessel A having the base-coating layer 2 at 100 ∼ 200°C for 30 ∼ 40 min; forming a printing layer 3 on the primarily cured cooking vessel A using a printer; pre-heating the cured cooking vessel to 50 ∼ 60°C and forming a top-coating layer 4 using a transparent ceramic material; and secondarily dry curing the cooking vessel A having the top-coating layer 4 at 100 ∼ 200°C for 30 ∼ 40 min.

The top-coating layer 4 of the cooking vessel A thus configured contains a magnetic material that is reactive to a magnetic force. Furthermore, the providing of the magnets 5 on the lower surface of the cooking vessel A is carried out before forming the top-coating layer, whereby the blend of iron, magnesium, cobalt and the like, having reactivity to the magnets, which are included in the top-coating layer, may be disposed in the form of a hologram of various patterns.

In the cooking vessel A thus processed, the use of a base that is made by means of a hydraulic press or herashibori is preferable.

The cooking vessel A is pre-heated in an oven to about 50 - 60°C after which the base 1 is coated with a ceramic material.

As such, the cooking vessel is plasticized in an oven at a temperature not higher than a maximum of 200°C for about 30 ∼ 40 min, whereby the coating can be securely adhered to the base.

In the course of the plasticization as above, the base-coating layer 2 formed on the base may be imparted with various colors as desired by a user, as well as a limited color as in a fluorine resin coating, thus satisfying the needs of the user.

When the base-coating layer 2 is partially cured, the printing layer 3 is formed in a desired shape at a desired position using a pad printer or a screen printer.

As such, the ink used for the printing layer 3 is one which was selected because it can be efficiently attached to the ceramic coating, and preferably includes a material the color of which may change, such as iron oxides.

Also, the above material may include any one selected from among a blend of organic red and black pigments and a thermochromic material such as a thermo pigment, and thus it is edible, whereby the vessel can be used safely.

Furthermore, in the case where a gas range or an induction range is used, thermochromism occurs at an appropriate temperature, and thus a user can easily perform cooking.

After the above processes are performed, the cooking vessel A including the printing layer 3 is pre-heated again in an oven to about 50 ∼ 60°C, and a ceramic top coating process is then performed.

The top coating process includes placing magnets 5 or electromagnets having a desired shape at a desired position inside a rotary jig for performing coating on the base and then making a transparent top coating.

An example of the electromagnets includes ferrite having a strong magnetic force, and various printing patterns, such as doughnuts, sun, stars, flame, and letters etc., are first formed and the transparent top coating is then formed thereon.

When the transparent coating is formed in this way, the pattern preferably selected by a user is formed, and thus the cooking vessel A that is preferred by a user may assume various forms.

The top coating has a blend of iron, magnesium, cobalt, etc., which are reactive to a magnetic force, thus simply forming the hologram 41 having various patterns depending on changes in voltage which flows through electromagnetic coils upon coating.

The magnets 5 which are typical magnets should be changed depending on the thickness or material of the base or the various patterns of the hologram 41. When electromagnets are used, changes in voltage may be simply controlled, thus easily and variously changing the hologram 41.

The cooking vessel having the coated base is plasticized in an oven at a temperature not higher than a maximum of 200°C for 30 ∼ 40 min to obtain a ceramic coated product having the thermochromic hologram 41.

Because the top-coating layer is transparent, the internal thermochromism of the vessel can be observed and such a top-coating layer is securely adhered to the base-coating layer 2 and the thermochromic printing layer, and thus does not peel off when used, unlike a fluorine resin coating.

Being free from cancerous materials, heavy metals, environmental hormones, organic compounds, toxic materials, and poisonous gases, the cooking vessel can be used safely.

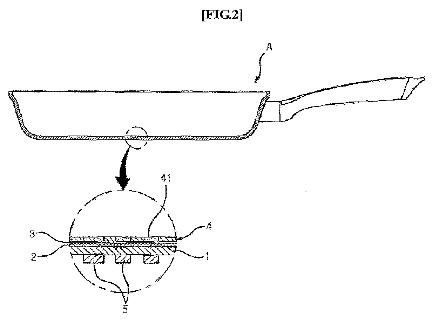

FIG. 2 is of a side view and a partial cross-sectional view, in which the base 1 is provided on the bottom of the cooking vessel, the base-coating layer 2 is formed on the base 1, and the printing layer 3 is formed on the base-coating layer 2.

The top-coating layer 4 is formed on the printing layer 3, and the top-coating layer 4 is composed of a transparent ceramic material and an oxide which is reactive to the magnets, in which the oxide is easily positioned by the magnets shown in the lower part.

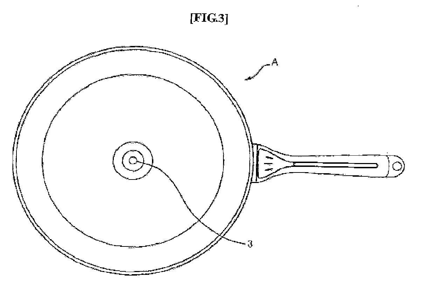

FIG. 3 is a top plan view of the cooking vessel including the printing layer. As shown in this drawing, the printing layer 3 is formed at the center of the vessel so that the color of the printing layer 3 varies depending on the temperature of heat transferred to the cooking vessel A.

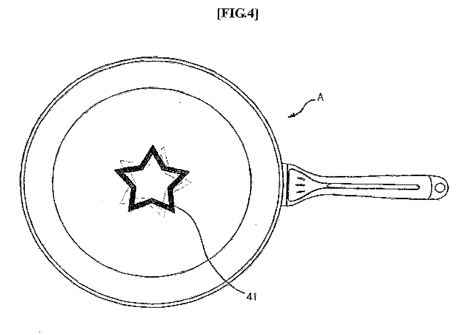

FIG. 4 is a top plan view of the cooking vessel in which the hologram 41 is displayed. As shown in this drawing, the full line shows the cooking vessel A when viewed from one side, and the imaginary line shows the cooking vessel A when viewed from the other side.

Depending on the angle at which the cooking vessel A is viewed from above, various patterns are displayed in the hologram 41, thus arousing the interest of the users who use the cooking vessel A.

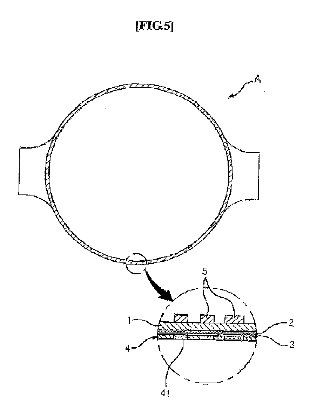

According to another embodiment of the present invention, as shown in FIGS. 5 to 7, a cooking vessel A has the same construction as in the above embodiment, with the exception that the base-coating layer 2, the printing layer 3, and the top-coating layer 4 are formed at different positions, and specifically the base-coating layer 2, the printing layer 3, and the top-coating layer 4 are formed on the outer surface of the cooking vessel A. The processing method according to another embodiment includes forming a base-coating layer 2; primarily dry curing the cooking vessel A including the base-coating layer 2 at 100 ∼ 200°C for 30 ∼ 40 min; forming a printing layer 3 on the primarily cured cooking vessel A using a printer; pre-heating the cured cooking vessel A to 50 ∼ 60°C and forming a top-coating layer 4 using a transparent ceramic material; and secondarily dry curing the cooking vessel A including the top-coating layer 4 at 100 ∼ 200°C for 30 ∼ 40 min.

FIG. 5 is of a top plan view and a partial cross-sectional view of another embodiment of the present invention. The base 1 is provided inside the cooking vessel, the base-coating layer 2 is formed on the outer surface of the base 1, and the printing layer 3 is formed on the base-coating layer 2.

The top-coating layer 4 is formed on the printing layer 3. The top-coating layer 4 is made of a transparent ceramic material and an oxide which is reactive to magnets, in which the oxide is easily positioned by the magnets shown in the lower part.

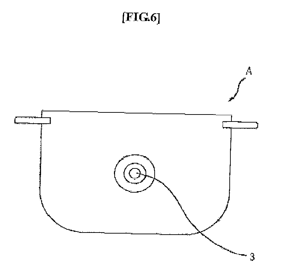

FIG. 6 is a side view of another embodiment including the printing layer. The printing layer 3 is formed at the center of the outer surface of the cooking vessel so that the color of the printing layer 3 varies depending on the temperature of heat transferred to the cooking vessel A.

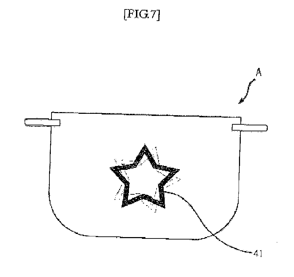

FIG. 7 is a side view of another embodiment, showing the hologram 41. In the drawing, the full line shows the cooking vessel A when viewed from one side, and the imaginary line shows the cooking vessel A when viewed from the other side.

Depending on the angle at which the cooking vessel A is viewed from above, various patterns are displayed in the hologram 41, thus arousing the interest of the users who use the cooking vessel A.

The ceramic coating method used for the cooking vessel A is a sol-gel process, by which a variety of inorganic networks may be formed from silicon or metal alkoxide monomer precursors and a gel composed of a single inorganic material is prepared and is converted into glass or ceramic at low temperature without melting it at high temperature.

When using the above procedure, a uniform inorganic oxide having superior properties such as hardness, transparency, chemical stability, controlled porosity, thermal conductivity, etc., can be produced at room temperature, unlike conventional methods of manufacturing inorganic glass which use melting at high temperature.

When the sol-gel process for producing glass or ceramic is applied, specific methods are developed, which enable a gel to be variously shaped to thus produce a monolith, thin film, fiber, powder having a uniform size, etc. From this method, it is possible to manufacture optical materials, protective films and porous films, optical coating, window insulators, dielectric and electronic material coating, high-temperature superconductors, reinforced fiber, fillers, catalysts, etc.

Accordingly, a colloidal state (sol) is prepared, and is converted into a liquid-phase network (gel) when the sol gels, thus forming an inorganic network. A precursor for synthesizing the colloid is composed of a material in which metal or metalloid elements are surrounded by various reactive ligands.

As such, metal alkoxides are mainly used because they are easily reacted with water. The metal alkoxides which are widely available include alkoxysilane, namely tetramethoxysilane (TMOS) and tetraethoxysilane (TEOS) .

Recently, however, a variety of metal alkoxides are mainly used for a sol-gel process in order to synthesize a high-temperature superconductor or ferroelectric material. In this case, two or more kinds of metal alkoxides are mixed and reacted to thus prepare a sol, in order to control stoichiometry of materials.

The sol-gel process mainly includes hydrolysis, condensation of alcohols, water condensation, and so on.

## Claims

1. A cooking vessel processing method, suitable for forming a coating layer on each of a base and a top, the method comprising:
pre-heating the base (1) of a cooking vessel (A) to 50 - 60°C and then forming a base-coating layer (2) on the base (1) using a ceramic material;
primarily dry curing the cooking vessel (A) including the base-coating layer (2) at 100 ∼ 200°C for 30 ∼ 40 min;
pre-heating the cured cooking vessel (A) to 50 ∼ 60°C and then forming a top-coating layer (4) using a transparent ceramic material; and
secondarily dry curing the cooking vessel (A) including the top-coating layer (4) at 100 ∼ 200°C for 30 ∼ 40 min.

2. The method of claim 1, comprising forming a printing layer (3) using a printer, after primarily dry curing the cooking vessel (A).

3. The method of claim 2, wherein the printing layer (3) is formed so as to be thermochromic using any one selected from among a mixture of organic red and black pigments, and a thermo pigment, which adhere efficiently to the base-coating layer (2).

4. The method of claim 1, wherein the top-coating layer (4) contains a magnetic material which is reactive to a magnetic force, and forming magnets for applying a magnetic force on a lower surface of the cooking vessel (A) is performed, so that the magnetic material is applied in a form of a hologram (41) along a shape of the magnets (5).

5. A cooking vessel processing method, suitable for forming a coating layer on each of a base and a top, the method comprising:
pre-heating the base (1) of a cooking vessel (A) to 50 ∼ 60°C and then forming a base-coating layer (2) on an outer surface of the base (1) using a ceramic material;
primarily dry curing the cooking vessel (A) including the base-coating layer (2) at 100 ∼ 200°C for 30 - 40 min;
pre-heating the cured cooking vessel (A) to 50 ∼ 60°C and then forming a top-coating layer (4) using a transparent ceramic material; and
secondarily dry curing the cooking vessel (A) including the top-coating layer (4) at 100 ∼ 200°C for 30 ∼ 40 min.

6. The method of claim 5, comprising forming a printing layer (3) using a printer, after primarily dry curing the cooking vessel (A).

7. The method of claim 6, wherein the printing layer (3) is formed so as to be thermochromic using any one selected from among a mixture of organic red and black pigments, and a thermo pigment, which adhere efficiently to the base-coating layer (2).

8. The method of claim 5, wherein the top-coating layer (4) contains a magnetic material which is reactive to a magnetic force, and forming magnets for applying the magnetic force on an inner surface of the cooking vessel (A) is performed, so that the magnetic material is applied in a form of a hologram (41) along a shape of the magnets (5).

9. A cooking vessel, processed by the method of any one of claims 1 to 8.
